# EUROPÄISCHE PATENTANMELDUNG

(11) **EP 3 034 926 A1**
(43) Veröffentlichungstag der Anmeldung: **22.06.2016**
(21) Anmeldenummer: 15200914.8
(22) Anmeldetag: 17.12.2015
(51) Int. Cl.: F16M 11/04, A42B 1/24, F16M 13/04, H04M 1/04, G02B 27/01

(54) **HALTEVORRICHTUNG FÜR EIN MOBILES, DIGITALES MULTIMEDIA-ENDGERÄT**

(30) Priorität: 19.12.2014 DE 202014106178 U
(71) Anmelder: headflat GmbH, 76133 Karlsruhe (DE)
(72) Erfinder: Keune, Dirk, 76275 Ettlingen (DE)
(74) Vertreter: Lemcke, Brommer & Partner Patentanwälte Partnerschaft mbB

(57) **Zusammenfassung**

Die vorliegende Erfindung betriff teine Haltevorrichtung (1) für ein mobiles digitales Multimedia-Endgerät (2), wie Pocket-PC, Smart-Phone oder dergleichen, aufweisend:
- einen Haltearm (4);
- an einem ersten Ende (4a) des Haltearms (4) angeordnete Befestigungsmittel (5), die zum Befestigen des Haltearms an einer Kopfbedeckung (3), vorzugsweise einer handelsüblichen Schirmmütze oder einem handelsüblichen Stirnband mit Sonnenschutz-Schild (3a), ausgebildet sind, so dass sich der Haltearm (4) in seinem Montagezustand von der Kopfbedeckung (3) aus in Blickrichtung eines Benutzers nach vorne erstreckt;
- an dem anderen, zweiten Ende (4b) des Haltearms angeordnete Aufnahme- und Haltemittel (6) für das Multimedia-Endgerät (2);
bei der die Aufnahme- und Haltemittel (6) für das Multimedia-Endgerät (2) derart relativ zu dem Haltearm (4) angeordnet oder einstellbar sind, dass sich zumindest die graphische Anzeigeeinrichtung (2a) eines darin aufgenommenen Multimedia-Endgeräts (2) nach Befestigung des Haltearms (4) an der Kopfbedeckung (3) im Wesentlichen mittig im Gesichtsfeld eines Benutzers befindet, wobei die Haltevorrichtung (1) wenigstens ein Klemmelement (7.1, 7.2) mit einer Klemmstruktur (7.1 b, 7.2b) umfasst, und dass im Bereich des ersten Endes (4a) des Haltearms (4) wenigstens ein Gegenstück zu dem Klemmelement (7.1, 7.2) vorgesehen ist, um das Klemmelement (7.1 a, 7.2a) lösbar mit dem Haltearm (4) zu verbinden und die Haltevorrichtung (1) mit dem ersten Ende (4a) des Haltearms (4) im Bereich der Klemmstruktur (7.1 b, 7.2b) lösbar an der Kopfbedeckung (3) zu fixieren.

## Beschreibung

Die Erfindung betrifft eine Haltevorrichtung nach dem Oberbegriff des Anspruchs 1 für ein mobiles, digitales Multimedia-Endgerät, wie Pocket-PC, Smart-Phone oder dergleichen, zur Befestigung des Endgeräts an einer im Wesentlichen handelsüblichen Kopfbedeckung.

Gattungsgemäße oder vergleichbare Haltevorrichtungen sind aus der DE 20 2009 009 326 U1, der DE 2010 009 960 U1, der DE 20 2013 000 740 U1 und der EP 2 103 863 B1 bekannt. Der Erfindung liegt die Aufgabe zugrunde, die bekannten Haltevorrichtungen im Hinblick auf eine einfache und kostengünstige Ausgestaltung, eine sichere Fixierbarkeit an der Kopfbedeckung und im Hinblick auf eine erhöhte Flexibilität im Einsatz weiter zu entwickeln.

Diese Aufgabe wird erfindungsgemäß gelöst durch eine Haltevorrichtung mit den Merkmalen des Anspruchs 1. Vorteilhafte Weiterentwicklungen der Erfindung sind Gegenstand von Unteransprüchen.

Erfindungsgemäß ist eine Haltevorrichtung für ein mobiles digitales Multimedia-Endgerät, wie Pocket-PC, Smart-Phone oder dergleichen, aufweisend: einen Haltearm; an einem ersten Ende des Haltearms angeordnete Befestigungsmittel, die zum Befestigen des Haltearms an einer Kopfbedeckung, vorzugsweise einer handelsüblichen Schirmmütze oder einem handelsüblichen Stirnband mit Sonnenschutz-Schild, ausgebildet sind, so dass sich der Haltearm in seinem Montagezustand von der Kopfbedeckung aus in Blickrichtung eines Benutzers nach vorne erstreckt; an dem anderen, zweiten Ende des Haltearms angeordnete Aufnahme- und Haltemittel für das Multimedia-Endgerät; bei der die Aufnahme- und Haltemittel für das Multimedia-Endgerät derart relativ zu dem Haltearm angeordnet oder einstellbar sind, dass sich zumindest die graphische Anzeigeeinrichtung eines darin aufgenommenen Multimedia-Endgeräts nach Befestigung des Haltearms an der Kopfbedeckung im Wesentlichen mittig im Gesichtsfeld eines Benutzers befindet, dadurch gekennzeichnet, dass die Haltevorrichtung wenigstens ein Klemmelement mit einer Klemmstruktur umfasst, und dass im Bereich des ersten Endes des Haltearms wenigstens ein Gegenstück zu dem Klemmelement vorgesehen ist, um das Klemmelement lösbar mit dem Haltearm zu verbinden und die Haltevorrichtung mit dem ersten Ende des Haltearms im Bereich der Klemmstruktur lösbar an der Kopfbedeckung zu fixieren.

In Weiterbildung dieses Gegenstandes kann vorgesehen sein, dass das Klemmelement wenigstens einen Vorsprung aufweist und dass als Gegenstück wenigstens eine Aufnahme für den Vorsprung vorgesehen ist, in welche Aufnahme das Klemmelement mit seinem Vorsprung im Wesentlichen passgenau einbringbar oder eingebracht ist, oder dass umgekehrt die Aufnahme an dem Klemmelement und der Vorsprung an dem Haltearm angeordnet ist.

Das Vorsehen des wenigstens einen Klemmelements mit Vorsprung und Klemmstruktur, welcher Vorsprung mit der Aufnahme am ersten Ende des Haltearms zusammenwirkt, bzw. das Vorsehen von Klemmelement und Gegenstück ermöglicht es, den Haltearm in einfacher und flexibler Weise lösbar an der Kopfbedeckung zu fixieren. Es ist also keinerlei Umbau oder Vorbereitung der Kopfbedeckung erforderlich, um die Haltevorrichtung ihrer bestimmungsgemäßen Verwendung zuzuführen. Aufgrund der Tatsache, dass das Klemmelement mit seinem Vorsprung in die genannte Aufnahme einbringbar oder eingebracht ist bzw. mit dem Gegenstück zusammenwirkt, kann die erfindungsgemäße Haltevorrichtung bei einer Vielzahl von handelsüblichen Kopfbedeckungen eingesetzt werden, weil auf diese Weise eine Anpassung an bestimmte Abmessungen der Kopfbedeckung im Fixierungsbereich (Materialdicke oder dergleichen) möglich ist. Auch eine umgekehrte Ausgestaltung ist möglich, bei der das Klemmelement die Aufnahme aufweist und der Vorsprung an dem Haltearm vorgesehen ist.

Vorteilhafterweise erfolgt mittels der Haltevorrichtung die Befestigung eines mobilen Endgeräts über genau einen Haltearm an einer handelsüblichen SchildKappe.

Der Haltearm wird mittels des mindestens einen Klemmelements, worauf weiter unten noch genauer eingegangen wird, seitlich links oder rechts an der SchildKappe befestigt. Der Bereich, an dem der Haltearm mit der Kappe verbunden ist, kann sich an der Seite und/oder auch im hinteren Bereich der Kappe bzw. der Kopfbedeckung befinden.

Wie bereits erwähnt, erfolgt die Verbindung des Haltearms mit der Kopfbedeckung vorzugsweise über eine Art Steckverbindung (Aufnahme und Vorsprung), die zur Fixierung mit einem Klipp, einem Magneten, einer Schraube, einer Klemme oder einem Klettband verbindbar ist.

Der Haltearm liegt vorzugsweise außen an der Kappe oder Kopfbedeckung an. Das Gegenstück, das für die Befestigung an der Kappe benötigt wird, liegt auf der Innenseite der Kappe an und wird beispielsweise über die genannte Steckverbindung an dem Haltearm befestigt. Alternativ können die beiden Teile, wie bereits erwähnt, auch über einen Magneten, Klettband, eine Schraube, einen Klipp oder eine Klemme verbunden sein.

Der Haltearm wird auf diese Weise an mindestens einer Stelle lösbar, war aber dennoch fest mit der Kappe verbunden.

Um den Haltearm noch sicherer mit der Kappe zu verbinden und insbesondere ein seitliches Wegrutschen der Kappe zu verhindern, hat sich als besonders vorteilhaft erwiesen, wenn der Haltearm zusätzlich auch am Schild der Kappe befestigt wird.

Zu diesem Zweck kann in Weiterbildung der Erfindung ein weiteres Befestigungsmittel (Klemmmittel) vorgesehen sein, welches vorteilhafterweise als Kunststoffteil ausgebildet ist. Das Befestigungsmittel bzw. Kunststoffteil ist vorteilhafterweise so beschaffen, dass es an dem Haltearm, der nach vorne über den Schild der Kappe verläuft, befestigt werden kann. Die Befestigung kann - ohne Beschränkung - über eine Verrastung, einen Klipp, eine Schraube, einen Magneten, ein Klettband oder eine Steckverbindung erfolgen.

Vorteilhafterweise weist das Kunststoffteil bzw. Befestigungsmittel an einer Seite eine strukturierte oder anderweitig behandelte Oberfläche auf, die ein Verrutschen bezüglich des Kappenschilds verhindern soll. Beispielsweise können in dem genannten Bereich Noppen, Spitzen oder Streifen aus einem geeigneten Material (Elastomer oder dergleichen) angeordnet sein, die vorzugsweise von unten gegen den Schild der Kappe drücken, wenn das Kunststoffteil (Befestigungsmittel) bestimmungsgemäß an dem Haltearm befestigt ist.

In Weiterbildung der erfindungsgemäßen Haltevorrichtung kann vorsehen sein, dass zum Fixieren des Haltearms an der Kopfbedeckung wenigstens zwei Klemmelemente nebst Gegenstücken vorgesehen sind, um die Verbindungssicherheit zu erhöhen.

Aus dem gleichen Grunde kann auch vorgesehen sein, dass die wenigstens zwei Klemmelemente nebst Gegentücken voneinander beabstandet angeordnet sind.

Wie bereits erwähnt wurde, können die Aufnahme und der Vorsprung bzw. das Klemmelement das Gegenstück komplementär nach Art einer Schraub-, Rast-, Presspass, Magnet- oder Klettverbindung ausgebildet sein.

Eine Weiterbildung der erfindungsgemäßen Haltevorrichtung sieht vor, dass die an dem zweiten Ende des Haltearms angeordneten Aufnahme- und Haltemittel für das Multimedia-Endgerät wenigstens ein weiteres Klemmelement mit einer Klemmstruktur umfassen, und dass im Bereich des zweiten Endes des Haltearms wenigstens ein Durchbruch für ein weiteres Gegenstück vorgesehen ist, welches mit dem weiteren Klemmelement zusammenwirkt, um das weitere Klemmelement lösbar mit dem Haltearm zu verbinden und das MultimediaEndgerät an dem zweiten Ende des Haltearms lösbar zu fixieren, vorzugsweise indem das weitere Klemmelement wenigstens eine Aufnahme aufweist, in welche Aufnahme das weitere Gegenstück im Wesentlichen passgenau einbringbar oder eingebracht ist, oder umgekehrt. Auf diese Weise ist eine besonders einfache und dennoch sichere Befestigungsmöglichkeit für das Multimedia-Endgerät geschaffen.

In Weiterbildung dieser Idee kann vorgesehen sein, dass an dem zweiten Ende des Haltearms wenigstens zwei weitere Klemmelemente und entsprechende weitere Gegenstücke voneinander beabstandet angeordnet sind, welcher Abstand vorzugsweise einstellbar-veränderlich ist, so dass die Aufnahme- und Haltemittel an verschieden dimensionierte Multimedia-Geräte anpassbar sind.

Auch in Bezug auf die Aufnahme- und Haltemittel kann vorgesehen sein, dass die Aufnahme und der Vorsprung bzw. das weitere Klemmelement und die weiteren Gegenstücke komplementär nach Art einer Schraub-, Rast-, Presspass, Magnet- oder Klettverbindung ausgebildet sind.

Eine andere Weiterbildung der erfindungsgemäßen Haltevorrichtung sieht vor, dass der Haltearm am Bereich des zweiten Endes eine Abwinkelung oder Abbiegung aufweist, um die Aufnahme- und Haltemittel für das MultimediaEndgerät im Gesichtsfeld des Benutzers zu positionieren, wobei das Maß der Abwinkelung oder Abbiegung vorzugsweise zwischen 70° und 110° und höchst vorzugsweise etwa 90° beträgt, wobei die Aufnahme- und Haltemittel für das Multimedia-Endgerät im Bereich der Abwinkelung angeordnet sind. Auf diese Weise kann die Haltevorrichtung den ihr zugedachten Einsatzzweck in besonderer Weise erfüllen.

Weiterhin kann vorgesehen sein, dass der Haltearm, vorzugsweise einstellbar, derart ausgebildet ist, dass sich die Aufnahme- und Haltemittel für das Multimedia-Endgerät in einem Abstand zwischen 10 cm und 40 cm, vorzugsweise zwischen 15 cm und 30 cm, vom Auge des Benutzers befinden. Auf diese Weise lässt sich das Multimedia-Endgerät bzw. dessen Anzeigevorrichtung (Bildschirm) möglichst gut und entspannt betrachten.

Der Haltearm kann mehrteilig, vorzugsweise zweiteilig oder dreiteilig, mit entsprechend mehreren Bestandteilen ausgebildet sein. Auf diese Weise lässt sich die Haltevorrichtung im nicht montierten Zustand einfach und platzsparend verpacken. Die Bestandteile können zur Bildung des Haltearms zusammenfügbar, vorzugsweise zusammensteckbar sein, so dass eine besonders einfache Montage gewährleistet ist.

Eine andere Weiterbildung der erfindungsgemäßen Haltevorrichtung sieht vor, dass ein das erste Ende des Haltearms umfassender Bestandteil gekrümmt ausgebildet ist, so dass er sich im Montagezustand aus einem seitlichen Bereich, bezogen auf den Kopf des Benutzers, nach Befestigung des Haltearms an der Kopfbedeckung, in einen Bereich im Wesentlichen mittig im Gesichtsfeld des Benutzers erstreckt. Vorzugsweise liegt der Haltearm dabei seitlich an der Kopfbedeckung sowie gegebenenfalls auf dem Schild einer handelsüblichen Schildkappe an bzw. auf.

Eine wieder andere Weiterbildung der erfindungsgemäßen Haltevorrichtung sieht vor, dass die Aufnahme- und Haltemittel für das Multimedia-Endgerät auf unterschiedlich dimensionierte Multimedia-Endgeräte einstellbar sind.

Der Haltearm kann zumindest in seinem den Aufnahme- und Haltemittel für das Multimedia-Endgerät zugewandten Abschnitte im Wesentlichen starr ausgebildet sein, wobei der Haltearm vorzugsweise wenigstens ein Gelenk aufweist, so dass die Aufnahme- und Haltemittel für das Multimedia-Endgerät aus dem Gesichtsfeld des Benutzers heraus bewegbar sind. Dies erhöht den Verwendungskomfort und macht die Haltevorrichtung an unterschiedliche Verwendungssituationen anpassbar.

Der Haltearm kann zumindest abschnittweise im Wesentlichen flach ausgebildet sein und/oder zumindest abschnittweise einen runden oder polygonalen Querschnitt aufweisen. Vorzugsweise ist der Haltearm in Kunststoff ausgebildet.

Zur Fixierung an einem Sonnenschutz-Schild der Kopfbedeckung kann wenigstens ein zusätzliches Klemmmittel vorgesehen sein, worauf bereits hingewiesen wurde. Dieses Klemmmittel ist vorzugsweise lösbar mit dem Haltearm und mit dem Sonnenschutz-Schild verbindbar oder verbunden.

Das genannte Klemmmittel kann in Weiterbildung wenigstens zwei Steckteile umfassen, die dazu ausgebildet sind, den Haltearm umschließend lösbar verbunden oder verbindbar miteinander zusammenzuwirken. Dabei kann eines der Steckteile eine vorspringende Struktur aufweisen, die dazu bestimmt ist, auf einer dem Haltearm abgewandten Seite an dem Sonnenschutz-Schild der Kopfbedeckung in Anlage zu treten.

Weiterhin kann vorgesehen sein, dass das Klemmmittel an der vorspringenden Struktur eine strukturierte oder beschichtete oder anderweitig behandelte Oberfläche aufweist, beispielsweise in Form von Noppen, Spitzen oder Streifen, wie bereits erwähnt, um vorzugsweise rutschfest von unten an dem Sonnenschutz-Schild der Kopfbedeckung in Anlage zu treten.

Die genannten Steckteile können komplementär nach Art einer Schraub-, Rast-, Presspass, Magnet- oder Klettverbindung ausgebildet sein.

Weitere Eigenschaften und Vorteile der Erfindung ergeben sich aus der nachfolgenden Beschreibung von Ausführungsbeispielen anhand der Zeichnung.
Figur 1 zeigt eine erfindungsgemäße Haltevorrichtung in einem demontierten Zustand;
Figur 2 zeigt exemplarisch das Zusammenwirken der Haltevorrichtung aus Figur 1 mit einer handelsüblichen Schildkappe aus einer ersten Perspektive; und
Figur 3 zeigt das Zusammenwirken gemäß Figur 2 aus einer anderen Perspektive.

Eine erfindungsgemäße Haltevorrichtung ist in Figur insgesamt mit den Bezugszeichen 1 bezeichnet. Sie umfasst im Wesentlichen einen einzelnen Haltearm 4, der sich aus drei Einzel- oder Bestandteilen 4.1, 4.2 und 4.3 zusammensetzt. Bei dem bezeichneten Ausführungsbeispiel sind die Bestandteile 4.1 bis 4.3 zusammensteckbar, um den Haltearm 4 zu bilden. Der erste Bestandteil 4.1 des Haltearms definiert ein erstes Ende 4a des Haltearms 4, während der dritte Bestandteil 4.3 ein zweites Ende 4b des Haltearms 4 definiert.

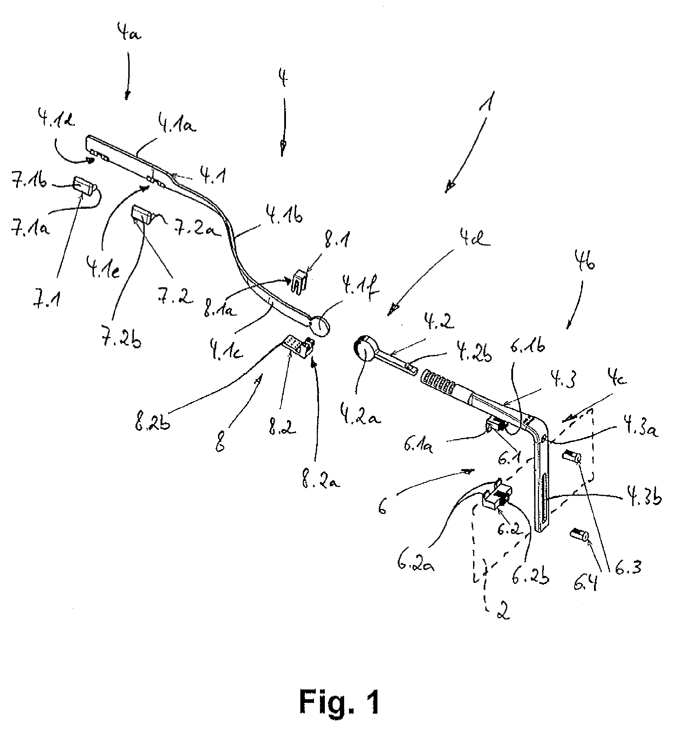

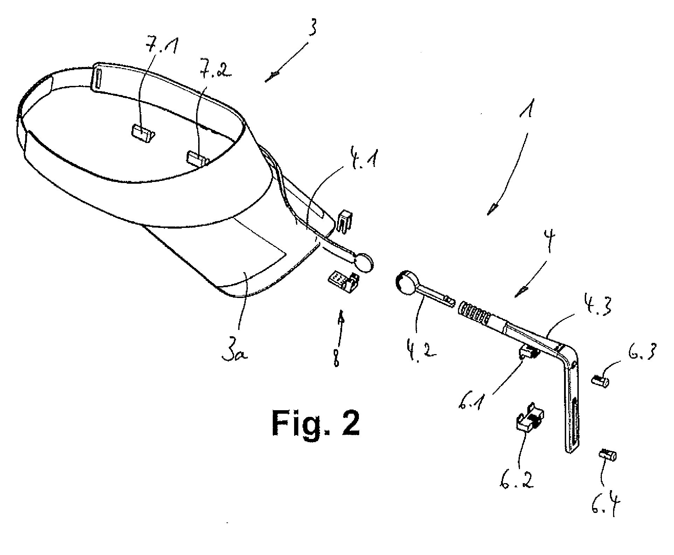

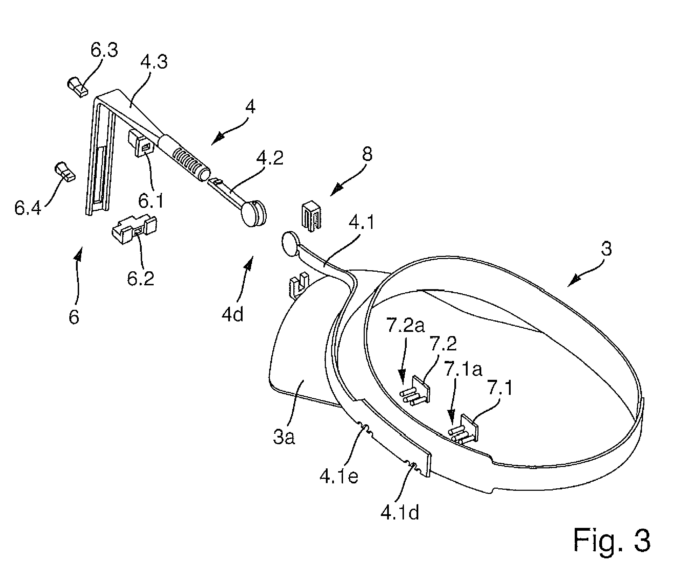

Der erste Bestandteil 4.1 des Haltearms 4 ist - wie die restliche Vorrichtung - in einem (flachen) Kunststoffmaterial ausgebildet und umfasst einen ersten geraden Bereich 4.1 a, an den sich ein gekrümmter Bereich 4.1 b anschließt, der wiederum in einen zweiten geraden Bereich 4.1c übergeht. Der zweite gerade Bereich 4.1 c ist gegenüber dem ersten geraden Bereich 4.1 a seitlich versetzt, wie dargestellt. In dem ersten geraden Bereich 4.1a, das heißt im Bereich des ersten Endes 4a weist der Haltearm 4 zwei voneinander beabstandete Ausnehmungen 4.1 d, 4.1 e auf, die dazu ausgebildet und bestimmt sind, mit jeweils einem Klemmelement 7.1, 7.2 zusammenzuwirken. Die Klemmelemente 7.1, 7.2 weisen jeweils wenigstens einen Vorsprung 7.1a, 7.2a und eine Klemmstruktur 7.1 b, 7.2b auf. Bei der dargestellten Ausführungsform besitzen beide Klemmelemente 7.1, 7.2 noch wenigstens einen zweiten Vorsprung, der jedoch aufgrund der gewählten Darstellung nicht erkennbar ist (vgl. Figur 3). Mit dem Vorsprung in 7.1a, 7.2a sind die Klemmelemente 7.1, 7.2 im Wesentlichen passgenau in die Aufnahmen 4.1d, 4.1e einbringbar, um das betreffende Klemmelement 7.1, 7.2 lösbar mit dem Haltearm 4 zu verbinden. Dadurch kann die Haltevorrichtung 1 mit dem ersten Ende 4a des Haltearms 4 im Bereich der Klemmstruktur 7.1 b, 7.2b lösbar an einer Kopfbedeckung (in Figur 1 nicht gezeigt) fixiert werden, indem ein Rand der Kopfbedeckung zwischen dem Bereich 4.1a des Haltearms 4 einerseits und die genannten Klemmstrukturen 7.1a, 7.2a andererseits eingebracht wird, wie weiter unten anhand von Figuren 2 und 3 noch erläutert werden wird.

An einem von dem ersten Ende 4a des Haltearms 4 abgewandten Ende des ersten Bestandteils 4.1 weist dieser eine kreisförmig erweiterte Struktur 4.1f auf, die zur Verbindung mit einer komplementären Struktur an dem zweiten Bestandteil 4.2 des Haltearms 4 ausgebildet ist. Diese komplementäre Struktur ist in Figur 1 mit Bezugszeichen 4.2a bezeichnet. Konkret ist die Struktur 4.2a dazu ausgebildet, die Struktur 4.1f aufzunehmen, wodurch eine gelenkige, schwenkbare Verbindung des ersten Bestandteils 4.1 mit dem zweiten Bestandteil 4.2 realisierbar ist. Dadurch kann der zweite Bestandteil 4.2 um eine Achse quer zur Längserstreckung des Haltearms 4 bzw. des Abschnitts 4.1c nach oben und unten verschwenkt werden, so dass ein Gelenk 4d ausgebildet ist.

An seinem der Struktur 4.2a abgewandten Ende weist der zweite Bestandteil 4.2 eine Rastnase 4.2b auf, die eine sichere Verbindung mit dem dritten Bestandteil 4.3 des Haltearms 4 ermöglicht. Zu diesem Zweck wird der zweite Bestandteil 4.2 des Haltearms 4 in eine geeignete Aufnahme (nicht gezeigt) an dem ihm zugewandten Ende des dritten Bestandteils 4.3 eingesteckt.

Im Bereich des dritten Bestandteils 4.3 weist der Haltearm 4 eine Abwinkelung 4c um im Wesentlichen etwa 90° nach unten auf, so dass sich das freie Ende des dritten Bestandteils 4.3 bei bestimmungsgemäßer Verwendung der Haltevorrichtung 1 (Figuren 2 und 3) etwa mittig im Gesichtsfeld des Benutzers befindet. In diesem Bereich sind Aufnahme- und Haltemittel 6 für ein (nur angedeutetes) Multimedia-Endgerät 2 angeordnet. Auf die konkrete Ausgestaltung der angesprochenen Aufnahme- und Haltemittel 6 wird nachfolgend genauer eingegangen.

Die Aufnahme- und Haltemittel 6 für das Multimedia-Endgerät 2 umfassen vorliegend zwei weitere Klemmelemente 6.1, 6.2, die mit jeweils einem weiteren Gegenstück 6.3, 6.4 verbindend zusammenwirken. Zu diesem Zweck sind in dem abgewinkelten Bereich des dritten Bestandteils 4.3 des Haltearms 4 entsprechende Durchbrüche 4.3a, 4.3b vorgesehen, wobei der Durchbruch 4.3b als Langloch ausgebildet ist, um eine Position des weiteren Klemmelements 6.2 und des weiteren Gegenstücks 6.4 bezüglich des Haltearms 4 an eine entsprechende Abmessung des Endgeräts 2 anpassen zu können. Die weiteren Klemmelemente 6.1, 6.2 weisen jeweils eine Klemmstruktur 6.1a, 6.2a in Form von Vorsprüngen sowie eine Aufnahme 6.1 b, 6.2b auf, in welche Aufnahme das betreffende weitere Gegenstück 6.3, 6.4 eingreift, um die Klemmelemente 6.1, 6.2 und darüber auch das Endgerät 2 an dem Haltearm 4 zu fixieren.

Wie der Fachmann erkennt, können die Verbindungsmöglichkeiten im Bereich der Klemmelemente 7.1, 7.2 bzw. der weiteren Klemmelemente 6.1, 6.2 auch gerade umgekehrt ausgebildet sein: Beispielsweise kann der Haltearm 4 im Bereich des ersten Bestandteils 4.1 Vorsprünge aufweisen, während die Klemmelemente 7.1, 7.2 mit entsprechenden Aufnahmen ausgestattet sind. Ebenso können die weiteren Klemmelemente 6.1, 6.2 Vorsprünge aufweisen, die in entsprechende Aufnahmen der weiteren Gegenstücke 6.3, 6.4 eingreifen.

Allgemein ist die Erfindung nicht auf das Vorsehen von Vorsprüngen und Aufnahmen beschränkt, wie sich aus den Ansprüchen ergibt.

Im Bereich des vorderen Endens des ersten Bestandteils 4.1 des Haltearms 4 ist noch ein zusätzliches Klemmmittel 8 vorgesehen, welches zur Fixierung des Haltearms 4 an einem Sonnenschutz-Schild einer Kopfbedeckung dient. Das Klemmmittel 8 ist lösbar mit dem Haltearm 4 und mit dem Sonnenschutz-Schild (hier nicht gezeigt) verbindbar. Dazu umfasst das Klemmmittel 8 wenigstens zwei Steckteile, die in Figur 1 mit den Bezugszeichen 8.1 bzw. 8.2 bezeichnet sind. Diese Steckteile sind dazu ausgebildet, den Haltearm 4 lösbar verbunden zu umschließen. Dazu weist das Steckteil 8.1 bei dem gezeigten Ausführungsbeispiel eine vorspringende Struktur 8.1a auf, die in eine entsprechende Aufnahme 8.2a des zweiten Steckteils 8.2 eingreift bzw. in Eingriff bringbar ist. Außerdem umfasst auch das zweite Steckteil 8.2 eine seitlich vorspringende Struktur 8.2b, die dazu bestimmt ist, auf einer dem Haltearm 4 abgewandten Seite an dem Sonnenschutz-Schild der Kopfbedeckung (nicht gezeigt) in Anlage zu treten. Um hier eine Verbindungssicherheit zu gewährleisten, ist an der vorspringenden Struktur 8.2b eine strukturierte oder beschichtete oder anderweitig behandelte Oberfläche vorgesehen, wie in Figur 1 exemplarisch dargestellt.

Die Figuren 2 und 3 zeigen die bestimmungsgemäße Verwendung der Haltevorrichtung 1 gemäß Figur 1, wobei aus Gründen der Übersichtlichkeit eine Figur 2 und 3 nicht sämtliche Bestandteile der Haltevorrichtung 1 nochmals explizit bezeichnet sind.

Zur Verdeutlichung der Verwendung umfassen die Figuren 2 und 3 auch eine handelsübliche Kopfbedeckung 3, die nach Art eines Stirnbandes mit Sonnenschutz-Schild 3a ausgebildet ist. Die Erfindung ist jedoch nicht auf die Verwendung mit einer derartigen Kopfbedeckung 3 beschränkt.

Wie bereits beschrieben, wird der Haltearm 4 mit seinem ersten Bestandteil 4.1 seitlich an der Kopfbedeckung 3 befestigt, indem die Klemmelemente 7.1, 7.2 mit dem Haltearm 4 bzw. dem Bestandteil 4.1 im Bereich der dortigen Aufnahmen 4.1 d, 4.1e verbunden werden. Dies ergibt sich besonders gut aus der Darstellung in Figur 3, aus der auch entnehmbar ist, dass die Klemmelemente 7.1, 7.2 mehr als nur einen Vorsprung 7.1a, 7.2a aufweisen. Die Aufnahmen 4.1d, 4.1e an dem ersten Bestandteil 4.1 des Haltearms 4 sind entsprechend ausgebildet. Auf diese Weise ergibt sich eine einfache und sichere Verbindung von Haltearm 4 und Kopfbedeckung 3, ohne dass die Kopfbedeckung 3 hierfür in irgendeiner Art und Weise vorbereitet werden müsste. Über eine Anpassung der Eindringtiefe der Vorsprünge 7.1a, 7.2a in die Aufnahmen 4.1 d, 4.1e lässt sich die Verbindung auch an unterschiedlich (dick) ausgestaltete Kopfbedeckungen 3 anpassen.

Über das Klemmmittel 8 erfolgt anschließend eine zusätzliche Fixierung des Haltearm 4 bzw. des ersten Bestandteils 4.1 im Bereich des Schildes 3a, wie weiter oben bereits beschrieben. Weiterhin werden die Bestandteile 4.2 und 4.3 miteinander und mit dem ersten Bestandteil 4.1 zusammengefügt, um die komplette Haltevorrichtung 1 bzw. den kompletten Haltearm 4 zu bilden. Durch Zusammenfügen der weiteren Klemmelemente 6.1, 6.2 mit den betreffenden weiteren Gegenstücken 6.3, 6.4 im vorderen Bereich des Haltearms 4 stehen anschließend die bereits beschriebenen Aufnahme- und Haltemittel 6 für das zu befestigende Endgerät 2 zur Verfügung, die zudem mittels des oben beschriebenen Langlochs an unterschiedlich dimensionierte Endgeräte 2 anpassbar sind. Über das Gelenk bei Bezugszeichen 4d lässt sich das Endgerät 2 bei Bedarf aus dem Gesichtsfeld des Benutzers hinaus schwenken. Die Steckverbindung zwischen den Bestandteilen 4.2 und 4.3 kann um eine Längsachse der Anordnung drehbar ausgebildet sein, um auf diese Weise noch weitere Einstellmöglichkeiten für die gesamte Haltevorrichtung 1 zu realisieren.

## Patentansprüche

1. Haltevorrichtung (1) für ein mobiles digitales Multimedia-Endgerät (2), wie Pocket-PC, Smart-Phone oder dergleichen, aufweisend:
- einen Haltearm (4);
- an einem ersten Ende (4a) des Haltearms (4) angeordnete Befestigungsmittel (5), die zum Befestigen des Haltearms an einer Kopfbedeckung (3), vorzugsweise einer handelsüblichen Schirmmütze oder einem handelsüblichen Stirnband mit Sonnenschutz-Schild (3a), ausgebildet sind, so dass sich der Haltearm (4) in seinem Montagezustand von der Kopfbedeckung (3) aus in Blickrichtung eines Benutzers nach vorne erstreckt;
- an dem anderen, zweiten Ende (4b) des Haltearms angeordnete Aufnahme- und Haltemittel (6) für das Multimedia-Endgerät (2);
bei der die Aufnahme- und Haltemittel (6) für das Multimedia-Endgerät (2) derart relativ zu dem Haltearm (4) angeordnet oder einstellbar sind, dass sich zumindest die graphische Anzeigeeinrichtung (2a) eines darin aufgenommenen Multimedia-Endgeräts (2) nach Befestigung des Haltearms (4) an der Kopfbedeckung (3) im Wesentlichen mittig im Gesichtsfeld eines Benutzers befindet,
**dadurch gekennzeichnet, dass**
die Haltevorrichtung (1) wenigstens ein Klemmelement (7.1, 7.2) mit einer Klemmstruktur (7.1b, 7.2b) umfasst, und dass im Bereich des ersten Endes (4a) des Haltearms (4) wenigstens ein Gegenstück zu dem Klemmelement (7.1, 7.2) vorgesehen ist, um das Klemmelement (7.1a, 7.2a) lösbar mit dem Haltearm (4) zu verbinden und die Haltevorrichtung (1) mit dem ersten Ende (4a) des Haltearms (4) im Bereich der Klemmstruktur (7.1 b, 7.2b) lösbar an der Kopfbedeckung (3) zu fixieren.

2. Haltevorrichtung (1) nach Anspruch 1, **dadurch gekennzeichnet, dass** das Klemmelement (7.1, 7.2) wenigstens einen Vorsprung (7.1a, 7.2a) aufweist und dass als Gegenstück wenigstens eine Aufnahme (4.1 d, 4.1e) für den Vorsprung (7.1a, 7.2a) vorgesehen ist, in welche Aufnahme (4.1d, 4.1e) das Klemmelement (7.1, 7.2) mit seinem Vorsprung (7.1a, 7.2a) im Wesentlichen passgenau einbringbar oder eingebracht ist, oder dass umgekehrt die Aufnahme an dem Klemmelement und der Vorsprung an dem Haltearm angeordnet ist.

3. Haltevorrichtung (1) nach Anspruch 1 oder 2, **dadurch gekennzeichnet, dass** wenigstens zwei Klemmelemente (7.1, 7.2) vorgesehen sind.

4. Haltevorrichtung (1) nach Anspruch 3, **dadurch gekennzeichnet, dass** die wenigstens zwei Klemmelemente (7.1, 7.2) voneinander beabstandet angeordnet sind.

5. Haltevorrichtung (1) nach mindestens einem der Ansprüche 1 bis 4, **dadurch gekennzeichnet, dass** das Klemmelement (7.1, 7.2) und das Gegenstück komplementär nach Art einer Schraub-, Rast-, Presspass-, Magnet- oder Klettverbindung ausgebildet sind.

6. Haltevorrichtung (1) nach mindestens einem der Ansprüche 1 bis 5, **dadurch gekennzeichnet, dass** die an dem zweiten Ende (4b) des Haltearms (4) angeordneten Aufnahme- und Haltemittel (6) für das Multimedia-Endgerät (2) wenigstens ein weiteres Klemmelement (6.1, 6.2) mit einer Klemmstruktur (6.1a, 6.2a) umfassen, und dass im Bereich des zweiten Endes (4b) des Haltearms (4) wenigstens ein Durchbruch (4.3a, 4.3b) für ein weiteres Gegenstück (6.3, 6.4) vorgesehen ist, welches mit dem weiteren Klemmelement (6.1, 6.2) zusammenwirkt, um das weitere Klemmelement (6.1, 6.2) lösbar mit dem Haltearm (4) zu verbinden und das Multimedia-Endgerät (2) an dem zweiten Ende (4b) des Haltearms (4) lösbar zu fixieren, vorzugsweise indem das weitere Klemmelement (6.1, 6.2) wenigstens eine Aufnahme (6.1 b, 6.2b) aufweist, in welche Aufnahme (6.1 b, 6.2b) das weitere Gegenstück (6.3, 6.4) im Wesentlichen passgenau einbringbar oder eingebracht ist, oder umgekehrt.

7. Haltevorrichtung (1) nach Anspruch 6, **dadurch gekennzeichnet, dass** an dem zweiten Ende (4b) des Haltearms (4) wenigstens zwei weitere Klemmelemente (6.1, 6.2) voneinander beabstandet angeordnet sind, welcher Abstand vorzugsweise einstellbar-veränderlich ist.

8. Haltevorrichtung (1) nach Anspruch 6 oder 7, **dadurch gekennzeichnet, dass** das weitere Klemmelement (6.1, 6.2) und das Gegenstück (6.3, 6.4) komplementär nach Art einer Schraub-, Rast-, Presspass-, Magnet- oder Klettverbindung ausgebildet sind.

9. Haltevorrichtung (1) nach mindestens einem der Ansprüche 1 bis 8, **dadurch gekennzeichnet, dass** der Haltearm (4) im Bereich seines zweiten Endes (4b) eine Abwinkelung oder Abbiegung (4c) aufweist, um die Aufnahme- und Haltemittel (6) für das Multimedia-Endgerät (2) im Gesichtsfeld des Benutzers zu positionieren, wobei das Maß der Abwinkelung oder Abbiegung (4c) vorzugsweise zwischen 70° und 110° und höchst vorzugsweise etwa 90° beträgt, wobei die Aufnahme- und Haltemittel (6) für das Multimedia-Endgerät (2) im Bereich der Abwinkelung (4c) angeordnet sind.

10. Haltevorrichtung (1) nach mindestens einem der Ansprüche 1 bis 9, **dadurch gekennzeichnet, dass** der Haltearm (4), vorzugsweise einstellbar, derart ausgebildet ist, dass sich die Aufnahme- und Haltemittel (6) für das Multimedia-Endgerät (2) in einem Abstand zwischen 10 cm und 40 cm, vorzugsweise zwischen 15 cm und 30 cm, vom Auge des Benutzers befinden.

11. Haltevorrichtung (1) nach mindestens einem der Ansprüche 1 bis 10, **dadurch gekennzeichnet, dass** der Haltearm (4) mehrteilig, vorzugsweise zweiteilig oder dreiteilig, mit entsprechend mehreren Bestandteilen (4.1, 4.2, 4.3) ausgebildet ist.

12. Haltevorrichtung (1) nach Anspruch 11, **dadurch gekennzeichnet, dass** die Bestandteile (4.1, 4.2, 4.3) zur Bildung des Haltearms (4) zusammenfügbar, vorzugsweise zusammensteckbar sind.

13. Haltevorrichtung (1) nach Anspruch 11 oder 12, **dadurch gekennzeichnet, dass** ein das erste Ende (4a) des Haltearms (4) umfassender Bestandteil (4.1) gekrümmt ausgebildet ist, sodass er sich im Montagezustand aus einem seitlichen Bereich, bezogen auf den Kopf des Benutzers, nach Befestigung des Haltearms (4) an der Kopfbedeckung (3), in einen Bereich im Wesentlichen mittig im Gesichtsfeld des Benutzers erstreckt.

14. Haltevorrichtung (1) nach mindestens einem der Ansprüche 1 bis 13, **dadurch gekennzeichnet, dass** die Aufnahme- und Haltemittel (6) für das Multimedia-Endgerät (2) auf unterschiedlich dimensionierte Multimedia-Endgeräte einstellbar sind.

15. Haltevorrichtung (1) nach mindestens einem der Ansprüche 1 bis 14, **dadurch gekennzeichnet, dass** der Haltearm (4) zumindest in seinem den Aufnahme- und Haltemitteln (6) für das Multimedia-Endgerät (2) zugewandten Abschnitt im Wesentlichen starr ausgebildet ist, wobei der Haltearm (4) vorzugsweise wenigstens ein Gelenk (4d) aufweist, so dass die Aufnahme- und Haltemittel für das Multimedia-Endgerät aus dem Gesichtsfeld des Benutzers heraus bewegbar sind.

16. Haltevorrichtung (1) nach mindestens einem der Ansprüche 1 bis 15, **dadurch gekennzeichnet, dass** der Haltearm (4) zumindest abschnittweise im Wesentlichen flach ausgebildet ist, und/oder dass der Haltearm zumindest abschnittweise einen runden oder polygonalen Querschnitt aufweist und vorzugsweise in Kunststoff ausgebildet ist.

17. Haltevorrichtung (1) nach mindestens einem der Ansprüche 1 bis 16, **dadurch gekennzeichnet, dass** zur Fixierung an einem Sonnenschutz-Schild (3a) der Kopfbedeckung (3) wenigstens ein zusätzliches Klemmmittel (8) vorgesehen ist, welches Klemmmittel (8) lösbar mit dem Haltearm (4) und mit dem Sonnenschutz-Schild (3a) verbindbar oder verbunden ist.

18. Haltevorrichtung (1) nach mindestens Anspruch 17, **dadurch gekennzeichnet, dass** das Klemmmittel (8) wenigstens zwei Steckteile (8.1, 8.2) umfasst, die dazu ausgebildet sind, den Haltearm umschließend lösbar verbunden oder verbindbar miteinander zusammenzuwirken, wobei eines der Steckteile (8.2) eine vorspringende Struktur (8.2b) aufweist, die dazu bestimmt ist, auf einer dem Haltearm (4) abgewandten Seite an dem Sonnenschutz-Schild (3a) der Kopfbedeckung (3) in Anlage zu treten.

19. Haltevorrichtung (1) nach mindestens Anspruch 18, **dadurch gekennzeichnet, dass** das Klemmmittel (8) an der vorspringenden Struktur (8.2b) eine strukturierte oder beschichtete Oberfläche aufweist, beispielsweise in Form von Noppen, Spitzen oder Streifen, um von unten rutschfest an dem Sonnenschutz-Schild (3a) der Kopfbedeckung (3) in Anlage zu treten.

20. Haltevorrichtung (1) nach mindestens einem der Ansprüche 17 bis 19, **dadurch gekennzeichnet, dass** die Steckteile (8.1, 8.2) komplementär nach Art einer Schraub-, Rast-, Presspass-, Magnet- oder Klettverbindung ausgebildet sind.
